Europäisches Patentamt

European Patent Office

Office européen des brevets

(11) Veröffentlichungsnummer: **0 244 754 B1**

# (12) EUROPÄISCHE PATENTSCHRIFT

(45) Veröffentlichungstag der Patentschrift: **24.07.91**

(21) Anmeldenummer: 87106223.8

(22) Anmeldetag: 29.04.87

(51) Int. Cl.⁵: **A01N 25/04**, B01F 17/00

Die Akte enthält technische Angaben, die nach dem Eingang der Anmeldung eingereicht wurden und die nicht in dieser Patentschrift enthalten sind.

(54) **Herbizide Emulsionen.**

(30) Priorität: 02.05.86 DE 3614788

(43) Veröffentlichungstag der Anmeldung:
**11.11.87 Patentblatt 87/46**

(45) Bekanntmachung des Hinweises auf die Patenterteilung:
**24.07.91 Patentblatt 91/30**

(84) Benannte Vertragsstaaten:
**AT BE CH DE ES FR GB GR IT LI NL SE**

(56) Entgegenhaltungen:
EP-A- 0 006 293    EP-A- 0 070 702
EP-A- 0 118 759    EP-A- 0 130 370
DE-A- 3 302 648    DE-B- 2 167 051
DE-C- 2 857 693    GB-A- 813 531

(73) Patentinhaber: **HOECHST AKTIENGESELL-SCHAFT**
**Postfach 80 03 20**
**W-6230 Frankfurt am Main 80(DE)**

(72) Erfinder: **Frisch, Gerhard, Dr.**
**Westerwaldstrasse 7**
**W-6392 Wehrheim(DE)**
Erfinder: **Albrecht, Konrad, Dr.**
**Sodener Strasse 64**
**W-6233 Kelkheim (Taunus)(DE)**

## Beschreibung

Die vorliegende Erfindung betrifft herbizide Wasser-in-Öl-Emulsionen in Form von Fertigformulierungen. Fertigformulierungen sind beispielsweise erwünscht, wenn aus entsprechenden biologischen Vorversuchen bekannt ist, daß eine Wirkungsverbreiterung der Kombination gegenüber den Einzelwirkstoffen erreicht werden kann.

Bekannt sind gemäß EP-A 117 999 Formulierungen in Form von wäßrigen Mischdispersionen, die ein Wirkstoffkonzentrat auf der Basis von Phthalsäurealkylester als Lösungsmittel in Kombination mit einem wäßrigen Suspensionskonzentrat enthalten.

Aus der EP-A 0 070 702 sind stabile herbizide Öl-in-Wasser-Emulsionen bekannt, die Phosphonomethylglycinisopropylammoniumsalz und Alachlor als Wirkstoffkombination enthalten.

Aus der EP-A 0 006 293 sind Wasser-in-Öl-Emulsionen speziell für die Anwendung nach der ULV-Technik unter elektrostatischer Aufladung der Spritzmittel beschrieben. Die Emulsionen werden vor der Anwendung nicht mehr verdünnt.

Weiterhin sind aus der EP-A 0 118 759 Öl-in-Wasser-Emulsionen bekannt, die in Wasser nicht oder nur in geringem Maße lösliche Herbizide als Wirkstoffe enthalten.

Es wurde nun überraschenderweise gefunden, daß wäßrige Lösungen von salzartigen Wirkstoffen zusammen mit organischen Lösungen von Wirkstoffen und ausgewählten Tensidgemischen stabile Wasser-in-Öl-Emulsionen ergeben. Gegenstand der vorliegenden Erfindung sind daher herbizide Wasser-in-Öl-Emulsionen auf Basis von organischen Lösungsmitteln, Wasser und Tensiden sowie von zwei oder mehreren Wirkstoffen, dadurch gekennzeichnet, daß sie im wesentlichen aus

a) 1 – 60 Gew.-% Wirkstoffe, bestehend aus salzartig, wasserlöslichen Wirkstoffen und in organischen Lösungsmitteln löslichen Wirkstoffen,

b) 3 – 24,5 Gew.-% Tensiden, bestehend aus einer Kombination von, bezogen auf das Gewicht der Emulsion,

0,1 – 4,5 Gew.-% Phenylsulfonat-Salzen,

1 – 10 Gew.-% ethoxylierten Alkyl- (oder Polyaryl) phenolphosphaten,

0,1 – 2 Gew.-% ethoxylierten sauren Phosphorsäure-estern

1 – 8 Gew.-% nichtionischen Co-Tensiden aus der Gruppe, enthaltend Alkylphenolpoly-glykolether, ethoxylierter Ceto-stearylalkohol mit 20 EO, Glycerin-monostearat, Ethylenoxid-Propylen-oxid-Blockpolymere, ethoxyliertes Rizinusöl, Laurinmuyristin-säurediethanolamid, Kokosfettsäure-diethanolamid und Sorbitan-Trioleat, sowie

c) bis zu 75 Gew.-% organischen Lösungsmitteln

d) Wasser und

e) gegebenenfalls Aluminosilicaten und ähnlichen Stoffen als Verdicker

bestehen.

Als Wirkstoffe kommen die Salze von Glufosinate (US-PS 4,168,963), Bialaphos (US-PS 4,309,208), Phosalacine (S. Omura et al., The Japanese Journal of Antibiotics, 37(2), S.542 (1985), Paraquat (GB-A 813,531) und Glyphosate (US-PS 3,799,758) in Betracht.

Als Salze für die genannten Wirkstoffe kommen insbesondere die Alkali-, Erdalkali-, Ammoniumsalze oder die durch $(C_1-C_7)$Alkyl substituierten Ammoniumsalze in Frage.

Als in organischen Lösungsmitteln gelöste Wirkstoffe sind insbesondere geeignet Harnstoffderivate, wie Linuron, Monolinuron oder Acetanilid-Verbindungen wie Metolachlor oder Alachlor, herbizide Phenoxy-Derivate oder Wirkstoffe mit einem ähnlichen Wirkungsspektrum, die in den unten aufgeführten organischen Lösungsmitteln löslich sind oder von Natur aus flüssig vorliegen.

Bevorzugte organische Lösungsmittel sind aromatische Lösungsmittel wie, Toluol, Xylol, 1/2 Methyl-naphthalin, $C_6-C_{16}$-Aromatengemische wie z.B. die [R]Solvesso-Reihe (Fa. Esso) mit den Typen [R]Solvesso 100 (Kp 162-177°C), [R]Solvesso 150 (Kp 187-207°C) und [R]Solvesso 200 (Kp 219-282°C), Phthalsäure-$(C_1-C_{12})$alkylester, speziell Phthalsäure$(C_4-C_8)$alkylester, mit Wasser nicht mischbare Ketone wie beispielsweise Cyclohexanon oder Isophoron oder $(C_6-C_{20})$ Aliphaten, die linear oder cyclisch sein können, wie die Produkte der [R]Shellsoll Reihe, Typen T und K oder BP-n Paraffine.

Von den erfindungsgemäßen einzusetzenden Tensiden sind bevorzugt:

3

a) unter den Phenylsulfonaten, insbesondere die Alkalisalze, beispielsweise (R)Dispersant GN (Na-Phenylsulfonat, Fa. Rhône Poulenc)

b) unter den ethoxilierten Alkyl-(oder Polyaryl)phenolphosphaten beispielsweise (R)Soprophor FL (ethoxiliertes Polyarylphenolphosphat neutralisiert mit Triethanolamin, Fa. Rhône Poulenc), Hoe S 3475 (phosphatiertes Tristyryl phenolethoxilat, Fa. Hoechst AG), Emphos CS 1512 (alkyliertes Phenolethoxilat, phosphatiert, Fa. Witco Chemical S.A.) (R)Soprophor 3-D-33 (phosphatiertes Tristyrylphenolethoxilat, Fa. Rhône Poulenc),

c) unter den ethoxilierten sauren Phosphorsäureestern, beispielsweise (R)Gafac RM 410 (Fa. GAF Corp.)

d) unter nichtionische Co-Tensiden Alkylphenolpolyglykolether, beispielsweise (R)Sapogenat T (Fa. Hoechst AG), sowie (R)Rewomul CSF 20 (Cetostearylalkohol mit 20 EO (EO = Ethylenoxid-Einheiten), Fa. REWO, Chem. Group), (R)Rewomul MG (Glycerinmonostearat, Fa. REWO, Chem. Group), (R)Rewopal PO (Ethylenoxid-propylenoxid Block polymer, Fa. REWO, Chem. Group), (R)Emulpon EL 40 (Fa. Witco Chemical S.A.), (R)Emulsogen EL-Reihe (ethoxiliertes Rizinusöl, Fa. Hoechst AG), (R)Comperlan LMD (Laurinmyristinsäurediethanolamid, Fa. Henkel), (R)Comperlan COD (Kokosfettsäurediethanolamid, Fa. Henkel) und (R)Atlox 4885 (Sorbitan-Trioleat, Fa. ICI, Atlas Chemie).

Die Tensidzusammensetzung für die erfindungsgemäße herbizide Zusammensetzung besteht vorzugsweise aus 0,5 - 2,0 Gew.-% Phenylsulfonat-Salzen, 3,5 - 6 Gew.-% ethoxilierten Alkyl-(oder Polyaryl)phenolphosphaten, 0,4 - 0,7 Gew.-% ethoxilierten sauren Phosphorsäureestern und 2 - 6 Gew.-% nichtionischen Co-Tensiden, insbesondere Alkylpolyglykolethern.

Wasser, salzartiger, wasserlöslicher Wirkstoff und Phenylsulfonat-Salz bilden vorzugsweise die wäßrige Phase, organische Lösungsmittel, Wirkstoff, ethoxiliertes Alkyl(oder Polyaryl)phenolphosphat, ethoxilierter saurer Phosphorsäureester und Alkylphenolpolyglykolether vorzugsweise die organische Phase.

Das Verhältnis der Wirkstoffe in der wässrigen zu den Wirkstoffen in der organischen Phase kann 10 : 1 bis 1 : 10 betragen, vorzugsweise jedoch 1 : 1 bis 1 : 5 und ganz besonders 1 : 1 bis 1 : 3,5.

Beide Phasen - die wässrige und die organische - werden zusammen gerührt und dann Scherkräften im Bereich von 10 bis 7000 sec$^{-1}$ ausgesetzt, wie sie beispielsweise in Kolloidmühlen (Fa. PUC, Fa. Fryma), statischen Mischern ((R)Erestat), Turborührern (Ultraturax, Fa. IKA; Polytron, Fa. Kinematica) oder in ähnlichen Geräten auftreten. Hierbei wird aus einer beim Zusammengeben noch vorliegenden Öl-in-Wasser-Emulsion überraschenderweise eine Wasser-in-Öl-Emulsion, die im Gegensatz zu anderen Wasser-in-Öl-Emulsionen sehr gut in Wasser aufgeht, um dort wieder eine Öl-in-Wasser-Emulsion zu bilden. Diese Wasser-in-Öl-Emulsionen sind besonders lagerstabil, haben sehr gute anwendungstechnische Eigenschaften und erlauben in Wasser lösliche Wirkstoffe und solche in organischen Lösungsmitteln lösliche Wirkstoffe zu ausgezeichneten Fertigformulierungen zu kombinieren.

Das Verhältnis von wässriger zu organischer Phase variiert zwischen 20 : 80 und 60 : 40, vorzugsweise jedoch zwischen 35 : 65 und 50 : 50. Daß hier Wasser-in-Öl-Emulsionen vorliegen, läßt sich zum einen durch mikroskopische Beobachtung mittels angefärbter Phasen, zum anderen durch Leitfähigkeitsmessungen sehr gut bestätigen.

Der Mischung können zur Viskositätsverbesserung noch Aluminosilicate wie (R)Bentone SD-1 und ähnliche Stoffe als Verdicker zugesetzt werden.

Die Tensidmischungen sind auch zur Zubereitung von Fertigformulierungen geeignet, die nur einen der genannten Wirkstoffe enthalten.

In der nachfolgenden Tabelle sind Beispiele aufgeführt, die das erfindungsgemäße Verfahren erläutern.

4

## Tabelle:

Formulierungsbeispiele (Angaben der Bestandteile in Gew.-%)

| Zusammensetzung | 1 | 2 | 3 | 4 | 5 | 6 | 7 |
|---|---|---|---|---|---|---|---|
| Glufosinate | 9,33 | 9,33 | 9,33 | 9,33 | 9,33 | | |
| Glyphosate | | | | | | 3,3 | 3,3 |
| Metolachlor | | | | | | 7,7 | |
| Linuron | | | | | | | |
| Monolinuron | 14,0 | 14,0 | 14,0 | 14,0 | 14.0 | | 7,7 |
| Alachlor | | | | | | | |
| (R)Dispersant GN | 1,0 | 1,0 | 1,2 | 0,5 | 1,0 | 0,5 | 0,5 |
| (R)Soprophor FL/ (R)Sapogenat T 110 | 5,0 | 4,0 | 4,0 | 5,0 | 4,5 | 5,0 | 5,0 |
| | 4,0 | 3,0 | 3,0 | 3,5 | 3,0 | 4,0 | 4,0 |
| (R)Gafac RM 410 | 0,5 | 0,5 | 0,5 | 0,5 | 0,5 | 0,5 | 0,5 |
| (R)Bentone SD-I | 0,1 | 0,1 | | 0,1 | | | |
| Dioctyl-phthalat (DOP) | 36,0 | 40,0 | 40,0 | 38,0 | 38,0 | 72,0 | 72,0 |
| Isophoron | 14,0 | | | | | | |
| (R)Solvesso 200 | | | 10,0 | | | | |
| (R)Solvesso 100 | | | | 10,0 | | | |
| (R)Solvesso 150 | | | | | 12,0 | | |
| Cyclohexanon | | 12,0 | | | | | |

Wasser ad 100 %

●Dispersant GN: Na-Phenylsulfonat

●Soprophor FL: ethoxyliertes Polyatylphenolphosphat,
                  neutralisiert mit Triethanolamin

●Sapogenat T110: Triisobutylphenolpolyglykolether mit
                  etwa 11EO

●Gafac RM410: ethoxylierter saurer Phosphorsäureester

●Bentone SD-I: Aluminiumsilikat

●Solvesso: $(C_6-C_{16})$Aromatengemische
  Solvesso 200 (Kp 219-282°C) Solvesso 100 (Kp 162-177°C),
  Solvesso 150 (Kp 187-207°C)

## Tabelle (Fortsetzung)

| Zusammensetzung | 8 | 9 | 10 | 11 | 12 | 13 |
|---|---|---|---|---|---|---|
| Glufosinate | 14,3 | 12,8 | 12,5 | 5,0 | 16,4 | 15,0 |
| Glyphosate | | | | | | |
| Metolachlor | | | | 37,0 | 37,0 | |
| Linuron | | 12,8 | | | | |
| Monolinuron | 14,7 | | | | | 3,0 |
| Alachlor | | | 25,0 | | | |
| (R)Dispersant GN | 1,0 | 1,0 | 1,0 | 2,5 | 1,0 | 0,5 |
| (R)Soprophor FL | 6,0 | 6,0 | 5,0 | 5,0 | 5,0 | 5,0 |
| (R)Sapogenat T110 | 4,0 | 4,0 | 4,0 | 4,0 | 4,0 | 4,0 |
| (R)Gafac RM 410 | 0,5 | 0,5 | 0,5 | 0,5 | 0,5 | 0,5 |
| (R)Bentone SD-I | 0,1 | 0,1 | | | | |
| Diocytphthalat (DOP) | 40,0 | 5,0 | 21,0 | 10,8 | 10,8 | 42,0 |
| Isophoron | 10,0 | 30,7 | | | | |
| Wasser ad 100 % | | | | | | |

| Zusammensetzung | 14 | 15 | 16 | 17 |
|---|---|---|---|---|
| Glufosinate | 13,3 | 13,3 | 15,6 | 15,6 |
| Glyphosate | | | | |
| Metolachlor | 32,0 | 32,0 | 35,0 | 35,0 |
| Linuron | | | | |
| Monolinuron | | | | |
| Alachlor | | | | |
| (R)Dispersant GN | 2,0 | 2,0 | 1,0 | 1,0 |
| (R)Soprophor FL | 5,0 | 5,0 | 3,5 | 6,5 |
| (R)Sapogenat T110 | 3,0 | 3,0 | 5,5 | 2,5 |
| (R)Gafac RM 410 | 0,5 | 0,5 | 0,5 | 0,5 |
| (R)Bentone SD-I | | | 0,1 | 0,1 |
| Dioctylphthalat (DOP) | | | 10,5 | 10,5 |
| Xylol | 21,0 | | | |
| 1/2 Methyl-naphthalin | | 21,0 | | |
| Wasser ad 100 % | | | | |

Tabelle (Fortsetzung)

| Zusammensetzung | 18 | 19 | 20 | 21 | 22 | 23 | 24 |
|---|---|---|---|---|---|---|---|
| Glufosinate | 15,6 | 15,6 | 15,6 | 15,6 | 13,6 | 13,7 | 13,0 |
| Glyphosate | | | | | | | |
| Metolachlor | 35,0 | 35,0 | 35,0 | 35,0 | 30,8 | 30,8 | 30,0 |
| Linuron | | | | | | | |
| Monolinuron | | | | | | | |
| Alachlor | | | | | | | |
| (R)Dispersant GN | 1,0 | 1,0 | 1,0 | 1,0 | 1,0 | 1,0 | 1,0 |
| (R)Soprophor FL | 5,0 | 5,0 | 5,0 | 5,0 | 5,0 | 5,0 | 5,0 |
| (R)Sapogenat T110 | | | | | 2,0 | 2,0 | 2,0 |
| (R)Gafac RM 410 | 0,5 | 0,5 | 0,5 | 0,5 | 0,5 | 0,5 | 0,5 |
| (R)Rewomul CSF-20 | 4,0 | | | | | | |
| (R)Rewomul MG | | | 4,0 | | | | |
| (R)Rewopal PO | | 4,0 | | | | | |
| (R)Emulsogen EL 400 | | | | 4,0 | | | |
| (R)Comperlan LMD | | | | | 2,0 | | |
| (R)Comperlan COD | | | | | | 2,0 | |
| (R)Atlox 4885 | | | | | | | 2,0 |
| (R)Bentone SD-I | 0,1 | 0,1 | 0,1 | 0,1 | | | |
| Dioctyl-phthalat (DOP) | 10,5 | 10,5 | 10,5 | 10,5 | 17,0 | 17,0 | 17,0 |
| Wasser ad 100 % | | | | | | | |

®Rewomul CSF-20: Cetostearylalkohol mit 20EO  
®Rewomul MG:      Glycerinmonostearat  
®Rewopal PO:      Ethylenpropylenoxid-Blockpolymer  
®Emulsogen EL 400: ethoxyliertes Rizinusöl  
®Comperlan LMD:   Laurinmyristinsäurediethanolamid  
®Comperlan COD:   Kokosfettsäurediethanolamid  
®Atlox 4885:      Sorbitan-Trioleat

Tabelle, Fortsetzung

| Zusammensetzung | 25 | 26 | 27 | 28 | 29 | 30 |
|---|---|---|---|---|---|---|
| Glufosinate | | 23,0 | 16,1 | 9,33 | 15,6 | 9,1 |
| Glyphosate | 5,0 | | | | | |
| Metolachlor | 12,0 | 9,6 | 36,2 | | 35,0 | |
| Linuron | | | | | | 9,1 |
| Monolinuron | | | | 14,0 | | |
| (R)Dispersant GN | 0,5 | 1,0 | 1,0 | 1,0 | 1,0 | 1,0 |
| (R)Soprophor Fl/ Hoe S 3475* | 5,0 | 5,0 | 5,0 | 4,0 | 5,0* | 5,0 |
| (R)Sapogenat T110 | 4,0 | 4,0 | 4,0 | 5,0 | 4,0 | 5,0 |
| (R)Gafac RM 410 | 0,5 | 0,5 | 0,5 | 0,5 | 0,5 | 0,5 |
| (R)Bentone SD-I | | | | 0,05 | | 0,1 |
| Dioctyl-phthalat (DOP) | 60,0 | 30,0 | 10,0 | 50,0 | 10,5 | 53,8 |
| Wasser ad 100 % | | | | | | |

Tabelle, Fortsetzung

| Zusammensetzung | 31 | 32 | 33 | 34 |
|---|---|---|---|---|
| Glufosinate | 8,2 | 8,2 | 12,3 | 12,3 |
| Linuron | 8,2 | 8,2 | 8,2 | 8,2 |
| (R)Dispersant GN | 1,0 | 1,0 | 1,0 | 1,0 |
| (R)Soprophor FL | 5,0 | 5,0 | 5,0 | 5,0 |
| (R)Sapogenat T110 | 5,0 | 5,0 | 5,0 | 5,0 |
| (R)Gafac RM 410 | 0,5 | 0,5 | 0,5 | 0,5 |
| Dioctyl-phthalat (DOP) | 58,2 | 48,2 | 50,4 | 46,4 |
| Wasser ad 100 % | | | | |

HOE S 3475: phosphatiertes Tristyrylphenolethoxylat

**Patentansprüche**
**Patentansprüche für folgende Vertragsstaaten : AT, BE, CH, DE, FR, GB, GR, IT, LI, NL, SE**

1. Herbizide Wasser-in-Öl-Emulsion auf Basis von organischen Lösungsmitteln, Wasser und Tensiden sowie von zwei oder mehreren Wirkstoffen, dadurch gekennzeichnet, daß sie im wesentlichen aus

a) 1 - 60 Gew.-% herbiziden Wirkstoffen, bestehend aus mindestens einem wasserlöslichen salzartigen Wirkstoff aus der Gruppe der Glufosinat-, Bialaphos-, Phosalacin- und Glyphosatsalze und mindestens einem in organischen Lösungsmitteln löslichen Wirkstoff aus der Gruppe der Harnstoff- und Acetanilid-Verbindungen,

b) 3 - 24,5 Gew.-% Tensiden bestehend aus einer Kombination von, bezogen auf das Gewicht der Emulsion,

0,1 - 4,5 Gew.-% Phenylsulfonat-Salzen,

1 - 10 Gew.-% ethoxylierten Alkyl- (oder Polyaryl) phenolphosphaten,

0,1 - 2 Gew.-% ethoxylierten sauren Phosphorsäure-estern

1 - 8 Gew.-% nichtionischen Co-Tensiden aus der Gruppe, enthaltend Alkylphenolpoly-glykolether, ethoxylierter Ceto-stearylalkohol mit 20 EO, Glycerin-monostearat, Ethylenoxid-Propylen-oxid-Blockpolymere, ethoxyliertes

Rizinusöl, Laurinmuyristin-säurediethanolamid, Kokosfettsäure-diethanolamid und Sorbitan-Trioleat, sowie

c) bis zu 75 Gew.-% organischen Lösungsmitteln

d) Wasser und

e) gegebenenfalls Aluminosilicaten und ähnlichen Stoffen als Verdicker

besteht.

2. Emulsion nach Anspruch 1, dadurch gekennzeichnet, daß sie als wasserlösliche Wirkstoffe ein Glufosinatsalz enthält.

3. Emulsion gemäß einem oder mehreren der Ansprüche 1 und 2, dadurch gekennzeichnet, daß der in organischen Lösungsmitteln lösliche Wirkstoff Metolachlor, Linuron, Monolinuron und Alachlor ist.

4. Emulsion gemäß einem oder mehreren der Ansprüche 1 bis 3, dadurch gekennzeichnet, daß sie als Lösungsmittel Toluol, Xylol, 1/2 Methylnaphthalin, $C_6$-$C_{16}$-Aromatengemische, Phthalsäureester oder mit Wasser nicht mischbare Ketone enthält.

5. Emulsion gemäß einem oder mehreren der Ansprüche 1 bis 4, dadurch gekennzeichnet, daß sie

```
0,5 - 2,0 Gew.-%      Phenylsulfonat-Salze,

3,5 - 6   Gew.-%      ethoxylierte Alkyl- (oder Polyaryl)
                      phenolphosphate,

0,4 - 0,7 Gew.-%      ethoxylierte saure Phosphorsäureester
                      und

2   - 6   Gew.-%      nichtionische Co-Tenside
```

enthält.

6. Emulsion gemäß einem oder mehreren der Ansprüche 1 bis 5, dadurch gekennzeichnet, daß als nichtionisches Co-Tensid ein Alkylphenolpolyglykolether enthalten ist.

7. Emulsion gemäß einem oder mehreren der Ansprüche 1 bis 6, dadurch gekennzeichnet, daß das Verhältnis von wäßriger zu organischer Phase 20:80 bis 60:40 beträgt.

8. Verfahren zur Herstellung einer Emulsion gemäß einem oder mehreren der Ansprüche 1 bis 7, dadurch gekennzeichnet, daß man die wäßrige mit der organischen Phase mischt und sie anschließend Scherkräften im Bereich von 10 bis 7.000 $sec^{-1}$ aussetzt.

9. Verwendung einer herbiziden Emulsion gemäß Ansprüchen 1 bis 7 zur Bekämpfung von unerwünschtem Pflanzenwuchs.

**Patentansprüche für folgenden Vertragsstaat : ES**

1. Verwendung einer herbiziden Wasser-in-Öl-Emulsion auf Basis von organischen Lösungsmitteln, Wasser und Tensiden sowie von zwei oder mehreren Wirkstoffen, als Mittel zur Bekämpfung von unerwünschtem Pflanzenwuchs, dadurch gekennzeichnet, daß die Emulsion im wesentlichen aus

a) 1 – 60 Gew.-% Wirkstoffen, bestehend aus salzartig, wasserlöslichen Wirkstoffen und in organischen Lösungsmitteln löslichen Wirkstoffen,

b) 3 – 24,5 Gew.-% Tensiden bestehend aus einer Kombination von, bezogen auf das Gewicht der Emulsion,

0,1 – 4,5 Gew.-% Phenylsulfonat-Salzen,

1 – 10 Gew.-% ethoxylierten Alkyl- (oder Polyaryl) phenolphosphaten,

0,1 – 2 Gew.-% ethoxylierten sauren Phosphorsäure-estern

1 – 8 Gew.-% nichtionischen Co-Tensiden aus der Gruppe, enthaltend Alkylphenolpoly-glykolether, ethoxylierter Ceto-stearylalkohol mit 20 EO, Glycerin-monostearat, Ethylenoxid-Propylen-oxid-Blockpolymere, ethoxyliertes Rizinusöl, Laurinmuyristin-säurediethanolamid, Kokosfettsäure-diethanolamid und Sorbitan-Trioleat, sowie

c) bis zu 75 Gew.-% organischen Lösungsmitteln

d) Wasser und

e) gegebenenfalls Aluminosilicaten und ähnlichen Stoffen als Verdicker

besteht.

2. Verwendung der Emulsion nach Anspruch 1, dadurch gekennzeichnet, daß sie als wasserlösliche Wirkstoffe ein Glufosinatsalz enthält.

3. Verwendung der Emulsion gemäß einem oder mehreren der Ansprüche 1 und 2, dadurch gekennzeichnet, daß der in organischen Lösungsmitteln lösliche Wirkstoff Metolachlor, Linuron, Monolinuron und Alachlor ist.

4. Verwendung der Emulsion gemäß einem oder mehreren der Ansprüche 1 bis 3, dadurch gekennzeichnet, daß sie als Lösungsmittel Toluol, Xylol, 1/2 Methylnaphthalin, $C_6$-$C_{16}$-Aromatengemische, Phthal-säureester oder mit Wasser nicht mischbare Ketone enthält.

5. Verwendung der Emulsion gemäß einem oder mehreren der Ansprüche 1 bis 4, dadurch gekennzeich-net, daß sie

0,5 - 2,0 Gew.-% Phenylsulfonat-Salze,

3,5 - 6    Gew.-% ethoxylierte Alkyl- (oder Polyaryl)
           phenolphosphate,

0,4 - 0,7 Gew.-% ethoxylierte saure Phosphorsäureester und

2   - 6    Gew.-% nichtionische Co-Tenside

enthält.

6. Verwendung der Emulsion gemäß einem oder mehreren der Ansprüche 1 bis 5, dadurch gekennzeichnet, daß als nichtionisches Co-Tensid ein Alkylphenolpolyglykolether enthalten ist.

7. Verwendung der Emulsion gemäß einem oder mehreren der Ansprüche 1 bis 6, dadurch gekennzeichnet, daß das Verhältnis von wäßriger zu organischer Phase 20:80 bis 60:40 beträgt.

8. Verfahren zur Herstellung einer herbiziden Emulsion gemäß einem oder mehreren der Ansprüche 1 bis 7, dadurch gekennzeichnet, daß man die wäßrige mit der organischen Phase mischt und sie anschließend Scherkräften im Bereich von 10 bis 7.000 sec$^{-1}$ aussetzt.

**Claims**
**Claims for the following Contracting States : AT, BE, CH, DE, FR, GB, GR, IT, LI, NL, SE**

1. A herbicidal water-in-oil emulsion based on organic solvents, water and surfactants and two or more active compounds and essentially comprising

12

a) 1 - 60 % by weight of herbicidal compounds, comprising of at least one water-soluble salt-like active compound from the group comprising the glufosinate, bialaphos, phosalacin and glyphosate salts and at least one active compound from the group comprising the urea and acetanilide compounds which is soluble in organic solvents,

b) 3 - 24.5 % by weight of surfactants, comprising a combination of, based on the weight of the emulsion,

0.1 - 4.5% by weight of phenylsulfonate salts,

1 - 10 % by weight of ethoxylated alkyl- (or poly-aryl)phenol phosphates,

0.1 - 2 % by weight of ethoxylated acidic phosphoric acid esters,

1 - 8 % by weight of nonionic co-surfactants from the group containing alkylphenol polyglycol ether, ethoxylated ceto-stearyl alcohol containing 20 EO, glycerol monostearate,

ethylene oxide-propylene oxide block polymers, ethoxylated castor oil, lauric-myristic acid diethanolamide, coconut fatty acid diethanolamide and sorbitan trioleate, and

c) up to 75 % by weight of organic solvents

d) water

e) if desired aluminosilicates and similar substances

as thickeners.

2. An emulsion as claimed in claim 1, wherein the water-soluble active compound is a glufosinate salt.

3. An emulsion as claimed in one or more of claims 1 and 2, wherein the active compound which is soluble in organic solvents is metolachlor, linuron, monolinuron or alachlor.

4. An emulsion as claimed in one or more of claims 1 to 3, wherein the solvent is toluene, xylene, 1/2 methylnapthalene, a mixture of $C_6$-$C_{16}$-aromatic compounds, a phthalate or a water-immiscible ketone.

5. An emulsion as claimed in one or more of claims 1 to 4, which contains

```
0.5 - 2.0%  by weight  of phenylsulfonate salts,
3.5 - 6  %  by weight  of  ethoxylated  alkyl-  (or
                           polyaryl)phenol phosphates,
0.4 - 0.7%  by weight  of  ethoxylated  acidic  phos-
                           phoric acid esters and  .
2 - 6    %  by weight  of nonionic co-surfactants.
```

6. An emulsion as claimed in one or more of claims 1 to 5, wherein the nonionic co-surfactant present is an alkylphenol polyglycol ether.

7. An emulsion as claimed in one or more of claims 1 to 6, wherein the aqueous to organic phase ratio is 20 : 80 to 60 : 40.

8. A process for the preparation of an emulsion as claimed in one or more of claims 1 to 7, wherein the aqueous phase is mixed with the organic phase and it is subsequently subjected to shear forces in the range 10 to 7,000 $sec^{-1}$.

9. The use of a herbicidal emulsion as claimed in claims 1 to 7 for combating undesired plant growth.

**Claims for the following Contracting State : ES**

1. The use of a herbicidal water-in-oil emulsion based on organic solvents, water and surfactants and two or more active compounds, as an agent for combating undesired plant growth, where the emulsion essentially comprises

14

a) 1 - 60 % by weight of herbicidal compounds, comprising of at least one water-soluble salt-like active compound from the group comprising the glufosinate, bialaphos, phosalacin and glyphosate salts and at least one active compound from the group comprising the urea and acetanilide compounds which is soluble in organic solvents,

b) 3 - 24.5 % by weight of surfactants, comprising combination of, based on the weight of the emulsion,

0.1 - 4.5% by weight of phenylsulfonate salts,

1 - 10 % by weight of ethoxylated alkyl-(or poly-aryl)phenol phosphates,

0.1 - 2 % by weight of ethoxylated acidic phos-phoric acid esters,

1 - 8 % by weight of nonionic co-surfactants from the group containing alkylphenol polyglycol ether, ethoxylated ceto-stearyl alcohol containing 20 EO, glycerol monostearate, ethyle-neoxide-propyleneoxide block polymers, ethoxylated castor oil, lauric-myristic acid diethanolamide, coconut fatty acid diethanolamide and sorbitan trioleate, and

c) up to 75 % by weight of organic solvents

d) water

e) if desired aluminosilicates and similar substances as thickeners.

2. Use of the emulsion as claimed in claim 1, wherein the water-soluble active compound is a glufosinate salt.

3. Use of an emulsion as claimed in one or more of claims 1 and 2, wherein the active compound which is soluble in organic solvents is metolachlor, linuron, monolinuron or alachlor.

4. Use of the emulsion as claimed in one or more of claims 1 to 3, wherein the solvent is toluene, xylene, 1/2 methylnapthalene, a mixture of $C_6$-$C_{16}$-aromatic compounds, a phthalate or a water-immiscible ketone.

5. Use of the emulsion as claimed in one or more of claims 1 to 4, which contains

```
0.5 - 2.0%  by weight   of phenylsulfonate salts,
3.5 - 6  %  by weight   of  ethoxylated  alkyl-  (or
                            polyaryl)phenol phosphates,
0.4 - 0.7%  by weight   of  ethoxylated  acidic  phos-
                            phoric acid esters and
2 - 6    %  by weight   of nonionic co-surfactants.
```

6. The use of an emulsion as claimed in one or more of claims 1 to 5, wherein the nonionic co-surfactant present is an alkylphenol polyglycol ether.

7. Use of the emulsion as claimed in one or more of claims 1 to 6, wherein the aqueous to organic phase ratio is 20 : 80 to 60 : 40.

8. A process for the preparation of a herbicidal emulsion as claimed in one or more of claims 1 to 7, wherein the aqueous phase is mixed with the organic phase and it is subsequently subjected to shear forces in the range 10 to 7,000 $sec^{-1}$.

**Revendications**
**Revendications pour les Etats contractants suivants : AT, BE, CH, DE, FR, GB, GR, IT, LI, NL, SE**

1. Emulsion HL (eau-dans-l'huile) herbicide à base de solvants organiques, d'eau et de surfactifs ainsi que de deux ou de plus de deux matières actives, émulsion caractérisée en ce qu'elle est essentiellement constituée :

a) - de 1 à 60         % en poids de matières herbicides contituées d'au moins une matière active saline solubles dans l'eau appartenant à l'ensemble constitué par les sels du glufosinate, du bialaphos, de la phosalacine et du glyphosate, et d'au moins une matière active soluble dans des solvants organiques et appartenant à l'ensemble constitué par les dérivés de l'urée et les dérivés de l'acétanilide,

b) - de 3 à 24,5         % en poids de surfactifs constitués d'une association comprenant, par rapport au poids l'émulsion :

        de 0,1 à 4,5         % en poids de sels d'acides phényl-sulfoniques,

        de 1 à 10         % en poids de phosphate d'alkyl- (ou polyaryl)-phénols éthoxylés,

        de 0,1 à 2         % en poids d'esters phosphoriques acides éthoxylés, et

        de 1 à 8         % en poids de co-surfactifs non ioniques appartenant à l'ensemble constitué par les éthers polyglycoliques d'alkyl-phénols, l'alcool cétostéarylique éthoxylé à 20 motifs EO, le monostéarate du glycérol, les copolymères séquencés oxyde d'éthylène/oxyde de propylène, l'huile de ricin éthoxylée, le

diéthanolamide de l'acide laurique- ..
myristique, le diéthanolamide de
l'acide gras du coco et le trioléate
du sobitan,

c) - d'au plus 75 % en poids de solvants organiques,

d) - d'eau et

e) - éventuellement d'aluminosilicates et de matières
analogues en tant qu'épaississants.

2. Emulsion selon la revendication 1 caractérisée en ce qu'elle contient, comme substance active soluble dans l'eau, un sel de glufosinate.

3. Emulsion selon l'une des revendications 1 et 2, caractérisée en ce que la matière active soluble dans des solvants organiques est le métolachlore, le linuron, le monolinuron ou l'alachlore.

4. Emulsion selon l'une quelconque des revendications 1 à 3, caractérisée en ce qu'elle contient, comme solvants, du toluène, des xylènes, du méthyl-1(2) naphtalène, des mélanges d'hydrocarbures aromatiques en $C_6$-$C_{16}$, des esters d'acides phtaliques ou des cétones non miscibles à l'eau.

5. Emulsion selon l'une quelconque des revencations 1 à 4, caractérisée en ce qu'elle contient :

de 0,5 à 2,0 % en poids de sels d'acides phényl-
sulfoniques,

de 3,5 à 6 % en poids de phosphates d'alkyl-(ou
polyaryl)-phénols éthoxylés,

de 0,4 à 0,7 % en poids d'esters phosphoriques
acides éthoxylés, et

de 2 à 6 % en poids de co-surfactifs non
ioniques.

6. Emulsion selon l'une quelconque des revendications 1 à 5, caractérisée en ce qu'elle contient, comme co-surfactif non ionique un éther polyglycolique d'alkyl-phénol.

7. Emulsion selon l'une quelconque des revendications 1 à 6, caractérisée en ce que le rapport de la phase aqueuse à la phase organique est compris entre 20:80 et 60:40.

8. Procédé pour préparer une émulsion selon l'une quelconque des revendications 1 à 7, procédé caractérisé en ce qu'on mélange la phase aqueuse avec la phase organique et on soumet ensuite le mélange à des forces de cisaillement situées dans l'intervalle allant de 10 à 7000 $s^{-1}$.

9. Application d'une émulsion herbicide selon l'une quelconque des revendications 1 à 7 à la lutte contre la végétation indésirable.

**Revendications pour l'Etat contractant suivant : ES**

1. Application d'une émulsion HL (eau-dans-l'huile) herbicide à base de solvants organiques, d'eau et de surfactifs ainsi que de deux ou de plus de deux matières actives, comme produit pour lutter contre la végétation indésirable, application caractérisée en ce que l'émulsion est essentiellement contituée :

a) – de 1 à 60         % en poids de matières actives constituées de matières actives capables de se dissoudre dans de l'eau à l'état de sels, et de matières actives solubles dans des solvants organiques,

b) – de 3 à 24,5         % en poids de surfactifs constitués d'une association comprenant, par rapport au poids de l'émulsion :

        de 0,1 à 4,5         % en poids de sels d'acides phényl-sulfoniques,

        de 1 à 10         % en poids de phosphates d'alkyl-(ou polyaryl)-phénols éthoxylés,

        de 0,1 à 2         % en poids d'esters phosphoriques acides éthoxylés,et

        de 1 à 8         % en poids de co-surfactifs non ioniques pris dans l'ensemble constitué par les éthers polyglycoliques d'alkylphénols, l'alcool céto-stéarylique éthoxylé renfermant 20 motifs éthylène-oxy (EO), le monostéarate du glycérol, les copolymères séquencés oxyde d'éthylène/oxyde de propylène, les huiles de ricin éthoxylées, le diéthanolamide de l'acide laurique-myristique, le

        diéthanolamide de l'acide gras de l'huile de coco et le trioléate de sorbitan,

c) – d'au plus 75         % en poids de solvants organiques,

d) – d'eau et

e) – éventuellement d'aluminosilicates et de subtances analogues en tant qu'épaississants.

**2.** Application de l'émulsion selon la revendication 1 caractérisée en ce que celle-ci contient, comme matière active soluble dans l'eau, un sel de glufosinate.

**3.** Application de l'émulsion selon l'une des revendications 1 et 2, caractérisée en ce que la matière active soluble dans des solvants organiques est le métolachlore, le linuron, le monolinuron ou l'alachlore.

**4.** Application de l'émulsion selon l'une quelconque des revendications 1 à 3, caractérisée en ce qu'elle contient, comme solvants organiques, du toluène, des xylènes, du méthyl-1(2) naphtalène, des mélanges d'hydrocarbures aromatiques en $C_6$-$C_{16}$, des esters d'acides phtaliques ou des cétones non miscibles à l'eau.

**5.** Application de l'émulsion selon l'une quelconque des revendications 1 à 4, caractérisée en ce qu'elle contient :

```
de 0,5 à 2,0          % en poids de sels d'acides phényl-
                      sulfoniques,
de 3,5 à 6            % en poids de phosphates d'alkyl-(ou
                      polyaryl)-phénols éthoxylés,
de 0,4 à 0,7          % en poids d'esters phosphoriques
                      acides éthoxylés, et
de 2 à 6 %            en poids de co-surfactifs non
                      ioniques.
```

**6.** Application de l'émulsion selon l'une quelconque des revendications 1 à 5, caractérisée en ce qu'elle contient, comme co-surfactif non ionique, un éther polyglycolique d'alkyl-phénol.

**7.** Application de l'émulsion selon l'une quelconque des revendications 1 à 6, caractérisée en ce que le rapport de la phase aqueuse à la phase organique est compris entre 20:80 et 60:40.

**8.** Procédé pour préparer une émulsion herbicide selon l'une quelconque des revendications 1 à 7, procédé caractérisé en ce qu'on mélange la phase aqueuse avec la phase organique, puis on soumet le mélange à des forces de cisaillement situées dans l'intervalle allant de 10 à 7000 $s^{-1}$.